# EUROPÄISCHE PATENTSCHRIFT

(11) **EP 0 833 277 B1**
(45) Veröffentlichungstag und Bekanntmachung des Hinweises auf die Patenterteilung: **27.02.2002**
(21) Anmeldenummer: 97116327.4
(22) Anmeldetag: 19.09.1997
(51) Int. Cl.: G06K 17/00

(54) **Vorrichtung und Verfahren zur Bearbeitung eines Zahlungsbelegs**
Apparatus and method for processing cheques
Dispositif et méthode de traitement de chèques

(30) Priorität: 27.09.1996 DE 19639672
(43) Veröffentlichungstag der Anmeldung: 01.04.1998
(73) Patentinhaber: Petter, Walter, 73312 Geislingen (DE)
(72) Erfinder: Petter, Walter, 73312 Geislingen (DE)
(74) Vertreter: Patentanwälte Gesthuysen, von Rohr, Weidener, Häckel

(56) Entgegenhaltungen:
- EP-A- 0 027 246
- EP-A- 0 568 140
- DE-A- 2 729 059
- US-A- 4 542 378

## Beschreibung

Die vorliegende Erfindung betrifft eine Vorrichtung und ein Verfahren zur Bearbeitung eines Zahlungsbelegs gemäß dem Oberbegriff des Anspruchs 1 bzw. 8.

Eine derartige Vorrichtung und ein derartiges Verfahren sind aus dem Artikel "Schriftenleser erfassen Zahlungsbelege" von Herbert Stumm, erschienen in der Zeitschrift "data report 19" (1984), Heft 1, Seiten 14-17 bekannt. Gemäß dem Artikel ist eine Bearbeitung von eingereichten Schecks mit zugehörigen Einreicherformularen angedacht, wobei die Zahlungsdaten und die zusätzlichen Zahlungsinformationen durch ein Schriftenlesesystem erfaßt und die Scheckdaten mit Daten des Einreicherformulars abgestimmt werden können.

Von der Firma Petter Optic Electronics, Geislingen, wird eine Vorrichtung angeboten, die eine Leseeinheit zum Lesen der codierten Zeile eines Schecks sowie eine angeschlossene Verarbeitungseinheit und eine Ausgabeeinheit aufweist. Die von der Leseeinheit gelesene Codierzeile wird von der Verarbeitungseinheit zur Bestimmung von Zahlungsdaten, wie Betrag, Währung, Bankleitzahl, Kontonummer und Datum, ausgewertet, und diese Zahlungsdaten können mit der Ausgabeeinheit dann zwischengespeichert, angezeigt und/oder ausgegeben werden. Zusätzlich ist eine Bedruckungseinrichtung vorgesehen, um die Codierzeile eines Schecks bei Bedarf, beispielsweise hinsichtlich des Betrags, zu ergänzen. Schließlich weist die Vorrichtung zur Scheckbearbeitung eine Sortiereinheit zur Sortierung der bearbeiteten Schecks nach verschiedenen, vorgebbaren Kriterien auf. Diese Vorrichtung zur Scheckbearbeitung erleichtert die Erfassung von Zahlungseingängen per Scheck sehr.

Im geschäftlichen Zahlungsverkehr werden sehr häufig mehrere Rechnungen durch eine Zahlung mit einem Scheck oder einer Überweisung beglichen. Bei einer solchen Sammelzahlung werden die Verwendungszwecke als begleitende Zahlungsinformationen üblicherweise auf einem Begleitschreiben, einem sogenannten Avis, oder manchmal auf dem Zahlungsbeleg selbst angegeben. Die Erfassung dieser oftmals sehr umfangreichen begleitenden Zahlungsinformationen zur Verbuchung ist sehr arbeitsaufwendig.

Bei der Erfassung und Auswertung der begleitenden Zahlungsinformationen auf einem Einreicherformular bzw. einem Avis ist es wesentlich, eingelesene alphanumerische Zeichenketten als jeweilige Zahlungsinformation, wie Kontonummer der Buchhaltung, Rechnungsnummer, Einzelbetrag o. dgl., richtig zu erfassen, um eine fehlerfreie Übernahme der Daten zu ermöglichen.

Die DE - C - 27 29 059 offenbart eine Anordnung zum Verarbeiten von mindestens zwei verschiedenen Arten von zusammengehörigen Dokumenten, wie Rechnungen und Schecks. Hierbei werden auf der Rechnung angegebene zusätzliche Zahlungsinformationen, wie Betrag, Kundennummer, Artikelnummer usw., von einem optischen Leser automatisch eingelesen. Der Betrag des zugehörigen Schecks wird per Hand über eine Tastatur eingegeben und anschließend automatisch mit den zusätzlichen Zahlungsinformationen verglichen. Bei Bedarf können die Rechnung und der Scheck bedruckt werden. Die bearbeiteten Dokumente werden in getrennten Stapeln abgelegt. Eine zahlungsspezifische Identifikation der zusätzlichen Zahlungsinformationen ist nicht vorgesehen.

Der Prospekt "Burroughs S 100 OCR-A PRÜF- UND KODIER-SYSTEM", Prospekt 1043197G der Burroughs GmbH von 1981 offenbart eine Vorrichtung zur Bearbeitung von Zahlungsbelegen. Mit dieser Vorrichtung können Zahlungsbelege, wie Schecks oder Überweisungs-Trennsätze in OCR-A Schrift kodiert und indossiert werden. Bei Sammelaufträgen kann eine Aufsummierung der Einzelbeträge und ein Vergleich der Gesamtbeträge vorgenommen werden.

Der Lehre der vorliegenden Patentanmeldung liegt die Aufgabe zugrunde, die Vorrichtung und das Verfahren zur Bearbeitung eines Zahlungsbelegs mit den eingangs genannten Merkmalen dahingehend weiterzubilden, daß die Funktionalität wesentlich erhöht wird und die für eine Buchhaltung erforderlichen Daten bereit gestellt werden können und insbesondere daß eine automatisierte Auswertung von Zahlungsvorgängen unter Berücksichtigung begleitender Zahlungsinformationen mit korrekter Erfassung und Zuordnung der mitgeteilten Zahlungsinformationen ermöglicht wird.

Die Aufgabe wird durch eine Vorrichtung mit den Merkmalen des Anspruchs 1 bzw. ein Verfahren gemäß Anspruch 8 gelöst. Vorteilhafte Weiterbildungen sind Gegenstand der Unteransprüche.

Die Verwendung von insbesondere kundenspezifischen Parametern für die Identifikation der einzelnen Angaben auf dem Zahlungsbeleg oder einem begleitenden Informationsträger als Zahlungsinformationen ermöglicht die korrekte Erfassung der von jedem Zahler unterschiedlich angeordneten und aufbreiteten Zahlungsinformationen. Erst durch diese Maßnahme wird eine weitestgehend fehlerfreie Erfassung der zusätzlichen Zahlungsinformationen mit der entsprechend schnellen Verarbeitung bei geringem Personalaufwand möglich.

Insbesondere ist vorgesehen, daß die Vorrichtung eine zweite Leseeinheit zum Lesen begleitender Zahlungsinformationen, nämlich zumindest Angaben zum Verwendungszweck, wie Rechnungsnummern, Rechnungsbeträge, Skonti od. dgl., vom Zahlungsbeleg oder von einem begleitenden Informationsträger umfaßt und daß die Verarbeitungseinheit derart ausgebildet ist, daß die Zahlungsdaten und die Zahlungsinformationen so einander zugeordnet werden können, daß ein Verwendungszweck oder mehrere Verwendungszwecke den Zahlungsdaten eines Zahlungsbelegs zugeordnet werden können, so daß die einander zugeordneten Zahlungsdaten und Zahlungsinformationen mittels der Ausgabeeinheit speicherbar, anzeigbar und/oder ausgebbar sind.

Mittels der zweiten Leseeinheit ist es möglich, mindestens einen Verwendungszweck als begleitende Zahlungsinformationen zu erfassen, und daß beispielsweise einem Zahlungsbetrag mehrere Verwendungszwecke mittels der Verarbeitungseinheit zugeordnet und diese Daten mittels der Ausgabeeinheit zur Weiterverarbeitung ausgegeben werden können. Auf diese Weise werden alle für die buchhalterische Erfassung erforderlichen Daten bereitgestellt, so daß unter minimalem Aufwand eine Erfassung gerade von Zahlungsvorgängen im geschäftlichen Verkehr möglich ist.

In bevorzugter Ausgestaltung umfaßt die erste und/oder die zweite Leseeinheit eine optische Leseeinrichtung, wie einen Scanner, zum Lesen schriftlicher Zahlungsbelege und/oder Informationsträger. So können die Zahlungsinformationen eines den Eingang eines Schecks oder einer Überweisung begleitenden Schreibens erfaßt werden, wobei zur Erkennung der Zahlungsinformationen, also der Umsetzung der von der optischen Leseeinrichtung gelieferten Bilddaten in alpha-numerische Zeichen, der optischen Leseeinrichtung vorzugsweise eine Erkennungseinheit, die beispielsweise ein entsprechendes Schrifterkennungsprogramm umfaßt, nachgeordnet ist.

Eine besonders bevorzugte Ausführung zeichnet sich dadurch aus, daß die Vorrichtung so ausgebildet ist, daß aus den Zahlungsdaten, insbesondere aus der Kontonummer, mittels einer vorgebbaren, beispielsweise nach Kunden sortierten Liste Parameter für die zweite Leseeinheit und/oder die Erkennungseinheit zur Identifizierung von Informationsfeldern auf dem Zahlungsbeleg und/oder dem begleitenden Informationsträger bzw. in den von der zweiten Leseeinheit gelieferten Bilddaten bestimmbar sind. Diese Parameter geben beispielsweise bei einer tabellarischen Aufstellung der Verwendungszwecke für jeden Kunden die Inhalte der jeweiligen Spalten, wie Rechnungsnummer, Rechnungsdatum, Rechnungsbetrag, Skonto und eine laufende Nummer, an, so daß eine korrekte Erfassung und Zuordnung der auf dem jeweiligen Informationsträger oder Zahlungsbeleg mitgeteilten Zahlungsinformationen ermöglicht wird.

Vorzugsweise umfaßt die erste Leseeinheit einen Codeleser zum Lesen der in maschinenlesbaren Zeichen auf einem schriftlichen Zahlungsbeleg dargestellten Zahlungsdaten. Diese Ausgestaltung berücksichtigt, daß ein Scheck und ein Überweisungsbeleg üblicherweise eine Codierzeile mit maschinen-lesbarer Schrift tragen, die mit dem preisgünstig erhältlichen Codeleser sehr schnell und mit guter Erfassungsgenauigkeit gelesen werden kann.

Alternativ kann zum Codeleser jedoch auch eine andere optische Leseeinrichtung, wie ein Scanner, vorgesehen werden. Hierbei ist es dann weiter möglich, die erste und die zweite Leseeinheit durch eine einzige optische Leseeinrichtung zu bilden, die vorhandene Zahlungsinformationen auf einem Zahlungsbeleg über die in der Codierzeile enthaltenen Angaben hinaus miterfassen kann und die einen gegebenenfalls vorhandenen, den Zahlungsbeleg begleitenden Avis vor oder nach dem Lesen des Zahlungsbelegs zum Erfassen der begleitenden Zahlungsinformationen einlesen kann.

In einer weiteren bevorzugten Ausführungsform ist vorgesehen, daß der ersten Leseeinheit eine Bedruckungsvorrichtung zum Bedrucken schriftlicher Zahlungsbelege und/oder begleitender Informationsträger mit maschinen-lesbaren Zeichen zugeordnet ist. Hiermit kann beispielsweise die Codezeile eines Schecks ergänzt werden.

Um eine unmittelbare Nachbearbeitung der von der Vorrichtung erfaßten Zahlungsdaten bzw. Zahlungsinformationen zu ermöglichen, sieht eine bevorzugte Ausführungsform vor, daß die Vorrichtung eine Bearbeitungseinheit zur Korrektur und/oder Ergänzung der Zahlungsinformationen bzw. Zahlungsdaten umfaßt. So können vor einer Weiterleitung der Daten an eine Buchhaltung od. dgl. fehlende Angaben ergänzt und/oder fehlerhafte Angaben korrigiert werden.

Des weiteren kann eine Prüfeinheit vorgesehen sein, um bei mehreren Verwendungszwecken für einen Zahlungsvorgang den Betrag auf die verschiedenen Verwendungszwecke automatisch nach vorgebbaren Prioritäten aufteilen zu können und/oder überprüfen zu können, ob der Betrag des Zahlungsbelegs zur Deckung aller in den Verwendungszwecken angegebenen Rechnungsbeträge ausreicht.

Vorzugsweise weist die Ausgabeeinheit eine Schnittstelle zur Datenübertragung bzw. zum Datenaustausch auf. So können die von der vorschlagsgemäßen Vorrichtung erfaßten und einander zugeordneten Zahlungsdaten und Zahlungsinformationen über die Schnittstelle beispielsweise unmittelbar an eine Datenverarbeitungsanlage zur Erfassung und Verbuchung von Zahlungsvorgängen weitergeleitet werden. Jedoch ist es aber auch möglich, die von der Vorrichtung zur Bearbeitung eines Zahlungsbelegs erfaßten Daten auf einer Diskette oder einem sonstigem Medium abzuspeichern und/oder bei Bedarf anzuzeigen.

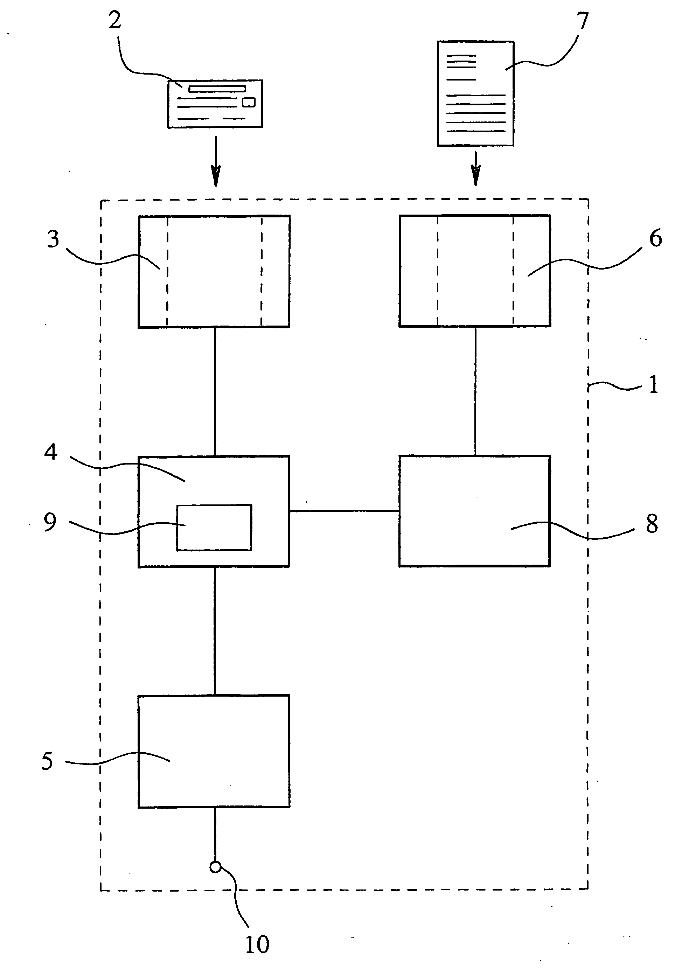

Nachfolgend wird die Erfindung anhand der Zeichnung eines Ausführungsbeispiels näher erläutert.

Die einzige Figur zeigt eine blockschaltbildartige, schematische Darstellung einer bevorzugten Ausführungsform einer vorschlagsgemäßen Vorrichtung zur Bearbeitung eines Zahlungsbelegs.

Die dargestellte Vorrichtung 1 dient der Bearbeitung eines Zahlungsbelegs 2, wie eines Schecks, einer Überweisung, einer Rechnung od. dgl. Hierzu weist die Vorrichtung 1 eine erste Leseeinheit 3, eine daran angeschlossene Verarbeitungseinheit 4 und eine Ausgabeeinheit 5 auf. Ferner umfaßt die Vorrichtung 1 eine zweite Leseeinheit 6 zum Lesen eines begleitenden Informationsträgers 7 und eine nachgeordnete, mit der Verarbeitungseinheit 4 verbundene Erkennungseinheit 8.

Die erste Leseeinheit 3 umfaßt hier eine nicht dargestellte optische Leseeinrichtung, insbesondere einen Codeleser zum Lesen von auf dem Zahlungsbeleg 2 dargestellten Zahlungsdaten. Diese Zahlungsdaten sind beispielsweise bei Schecks oder Überweisungen üblicherweise in einer Codierzeile in maschinen-lesbarer Form, wie in OCR-A- oder OCR-B-Schrift, dargestellt, und umfassen, sofern vorhanden, Betrag, Währung, Bankleitzahl, Kontonummer und dergleichen.

Die Zahlungsdaten jedes zu bearbeitenden Zahlungsbelegs 2 werden beim Darstellungsbeispiel, zumindest soweit sie in der Codierzeile aufgeführt sind, von der ersten Leseeinheit 3 gelesen und an die Verarbeitungseinheit 4 als digitale alpha-numerische Zeichen weitergeleitet.

In der Verarbeitungseinheit 4 werden die Zahlungsdaten erfaßt und können mittels der angeschlossenen Ausgabeeinheit 5 für einen Benutzer dargestellt werden.

Zur Korrektur und/oder Ergänzung der Zahlungsdaten umfaßt die Vorrichtung 1 bzw. die Verarbeitungseinheit 4 eine Bearbeitungseinheit 9, mittels derer fehlerhafte oder fehlende Zahlungsdaten eines Zahlungsdatensatzes korrigiert bzw. ergänzt werden können. Hierzu ist beispielsweise eine nicht dargestellte Eingabeeinheit, wie eine Tastatur, vorgesehen. Weiter ist der ersten Leseeinheit 3 gegebenenfalls eine nicht dargestellte Bedruckungseinrichtung zugeordnet, um eine Codezeile od. dgl. des Zahlungsbelegs 2 entsprechend der Eingabe korrigieren oder zumindest ergänzen zu können.

Die zweite Leseeinheit 6 umfaßt beim bevorzugten Ausführungsbeispiel ebenfalls eine optische Leseeinrichtung, wie einen Scanner, um begleitende Zahlungsinformationen, insbesondere von einem einen zu bearbeitenden Zahlungsbeleg 2 begleitenden Schreiben, wie einem Avis, einlesen zu können. Auf einem solchen Begleitschreiben sind die begleitenden Zahlungsinformationen aufgeführt. Diese umfassen zumindest Angaben zum Verwendungszweck des durch den Zahlungsbeleg 2 dargestellten Zahlungsvorgangs und insbesondere Rechnungsnummern, Rechnungsbeträge, Skonti und ähnliche Angaben, aus denen sich ergibt, worauf der dem Zahlungsvorgang zugrundeliegende Betrag angerechnet werden soll. Zur Erfassung dieser begleitenden Zahlungsinformationen wird der Informationsträger 7 oder gegebenenfalls der Zahlungsbeleg 2 von der zweiten Leseeinheit 6 gelesen bzw. gescannt, und die so gewonnenen Bilddaten werden an die Erkennungseinheit 8 weitergeleitet.

Die Erkennungseinheit 8 erkennt die Zahlungsinformationen, indem die von der Leseeinheit 6 gelieferten Bilddaten in alpha-numerische Zeichen umgesetzt werden. Dies erfolgt mit Hilfe eines Schrifterkennungsprogramms od. dgl. Um die richtige Identifizierung der die begleitenden Zahlungsinformationen bildenden Angaben, beispielsweise als Rechnungsnummer, Rechnungsbetrag, Skonto, Rechnungsdatum und dergleichen, sicherzustellen, ist vorgesehen, daß der Erkennungseinheit 8 Parameter eingebbar sind, die beispielsweise bei den üblicherweise in tabellarischer Form aufgebauten Avisen als Informationsträger 7 eine eindeutige Identifizierung der einzelnen Spalten ermöglichen. So legen die Parameter beispielsweise die übliche Reihenfolge der Angaben von Rechnungsbetrag, Rechnungsnummer, Rechnungsdatum und Skonto auf dem Informationsträger für einen bestimmten Kunden fest. Diese für die fehlerfreie Erkennung der Zahlungsinformationen zumindest vorteilhaften Parameter werden vorzugsweise von der Verarbeitungseinheit 4 bestimmt und für den aktuell auszuwertenden Informationsträger 7 bereitgestellt. Dies geschieht dadurch, daß anhand der mit Hilfe der ersten Leseeinheit 3 erfaßten Zahlungsdaten eines Zahlungsbelegs 2 bestimmt wird, welcher Kunde - identifiziert durch eine Kundennummer - den Zahlungsvorgang veranlaßt hat. Mittels dieser Kundennummer oder einer sonstigen Identifikation wird aus einer vorgegebenen Liste der für den aktuellen Kunden bzw. den aktuellen Zahlungsvorgang geltende Parametersatz, der den üblichen Aufbau und die übliche Anordnung von Daten auf den Avisen bzw. Informationsträgern 7 dieses Kunden widerspiegelt, ausgewählt und an die Erkennungseinheit 8 zur entsprechenden Identifizierung der Zahlungsinformationen auf einem aktuellen Informationsträger 7 dieses Kunden bzw. innerhalb der entsprechenden, von der zweiten Leseeinheit 6 gelieferten Bilddaten weitergeleitet.

Alternativ kann ein für die Auswertung einer aktuellen Zahlung erforderlicher Parametersatz zur Identifizierung von Zahlungsinformationen auch durch eine entsprechende Eingabe ausgewählt werden.

Die entsprechend der voranstehenden Beschreibung oder in einer sonstigen Weise erfaßten begleitenden Zahlungsinformationen werden an die Verarbeitungseinheit 4 weitergeleitet und dort den Zahlungsdaten eines zu dem aktuellen Informationsträger 7 korrespondierenden Zahlungsbelegs 2 zugeordnet.

Mit Hilfe der Bearbeitungseinheit 9 ist es möglich, fehlende oder fehlerhafte Angaben bei den Zahlungsinformationen zu ergänzen bzw. zu korrigieren, bevor die einander zugeordneten Zahlungsdaten und Zahlungsinformationen eines Zahlungsvorgangs von der Verarbeitungseinheit 4 an die Ausgabeeinheit 5 zur Speicherung und/oder Ausgabe an andere Datenverarbeitungsgeräte weitergeleitet werden.

Die Ausgabeeinheit 5, die zur Anzeige aktueller Funktionen der Vorrichtung 1 und/oder der Zahlungsdaten und Zahlungsinformationen einen Bildschirm oder ein sonstiges Display umfassen kann, weist vorzugsweise eine Schnittstelle 10 auf, um nach einer eventuellen Zwischenspeicherung die einander zugeordneten Zahlungsdaten und Zahlungsinformationen an eine Datenverarbeitungsanlage zur buchhalterischen Erfassung od. dgl. weiterleiten zu können.

Aus der voranstehenden Beschreibung ergibt sich, daß es mittels der vorschlagsgemäßen Vorrichtung 1 möglich ist, für einen Zahlungsvorgang automatisch mehrere Verwendungszwecke zu erfassen, so daß ein Zahlungsvorgang vollautomatisch mehreren Verwendungszwecken, wie dem Ausgleich mehrerer Rechnungen od. dgl., zugeordnet werden kann.

Sofern die begleitenden Zahlungsinformationen unmittelbar auf einem Zahlungsbeleg 2 angegeben sind, ist es selbstverständlich auch möglich, diesen Zahlungsbeleg 2 anstelle des Informationsträgers 7 mittels der zweiten Leseeinheit 6 einzulesen und dementsprechend die Zahlungsinformationen zu erfassen.

Bei einer Ausführungsvariante sind die erste Leseeinheit 3 und die zweite Leseeinheit 6 durch eine einzige optische Leseeinrichtung gebildet, der dann zum Erfassen der Daten beispielsweise der Zahlungsbeleg 2 und der Informationsträger 7 nacheinander zugeführt werden.

Bei der voranstehenden Erläuterung der bevorzugten Ausführungsform wurde nicht darauf eingegangen, daß den Leseeinheiten 3, 6 entsprechende Zuführeinrichtungen, Handhabungseinrichtungen und eventuell nachgeordnete Sortiereinrichtungen zur Handhabung von Zahlungsbelegen 2 und Informationsträgern 7 zugeordnet sind.

Die beschriebene Ausführungsform der vorschlagsgemäßen Vorrichtung 1 sieht vor, daß die Zahlungsbelege 2 und die Informationsträger 7 in schriftlicher Form vorliegen und optisch von den Leseeinheiten 3 und 6 eingelesen werden. Alternativ ist es jedoch auch möglich, in anderer, zum Beispiel digitaler Form vorliegende Zahlungsbelege 2 und Informationsträger 7 bei entsprechend angepaßten Leseeinheiten 3, 6 zu bearbeiten.

Schließlich kann die Vorrichtung 1 auch so ausgebildet sein, daß die von den Leseeinheiten 3 und 6 erfaßten Bilddaten des Zahlungsbelegs 2 und des Informationsträgers 7 an ein digitales Bildarchivierungssystem od. dgl. ausgebbar sind.

## Patentansprüche

1. Vorrichtung (1) zur Bearbeitung eines Zahlungsbelegs (2), wie eines Schecks oder einer Überweisung,
mit einer ersten Leseeinheit (3) zum Lesen von Zahlungsdaten des Zahlungsbelegs (2),
mit einer Verarbeitungseinheit (4) zur Auswertung von eingelesenen oder eingegebenen Zahlungsdaten, nämlich Betrag und gegebenenfalls Währung, Bankangaben, wie Bankleitzahl und Kontonummer, Datum od. dgl.,
mit einer Ausgabeeinheit (5) zur Zwischenspeicherung, Anzeige und/oder Ausgabe der Zahlungsdaten, und
mit einer zweiten Leseeinheit (6) zum Lesen begleitender Zahlungsinformationen, nämlich zumindest von Angaben zum Verwendungszweck, wie Rechnungsnummern, Rechnungsbeträge, Skonti od. dgl., vom Zahlungsbeleg (2) oder von einem begleitenden Informationsträger (7),
wobei die Verarbeitungseinheit (4) derart ausgebildet ist, daß die Zahlungsdaten und Zahlungsinformationen so einander zugeordnet werden können, daß ein Verwendungszweck oder mehrere Verwendungszwecke den Zahlungsdaten eines Zahlungsbelegs zugeordnet werden können,
so daß die einander zugeordneten Zahlungsdaten und Zahlungsinformationen mittels der Ausgabeeinheit (5) speicherbar, anzeigbar und/oder ausgebbar sind,
**dadurch gekennzeichnet,**
**daß** die Vorrichtung (1) so ausgebildet ist, daß aus den Zahlungsdaten, insbesondere aus der Kontonummer, mittels einer vorgebbaren, beispielsweise nach Kunden sortierten Liste Parameter für die zweite Leseeinheit (6) und/oder eine Erkennungseinheit (8) zur Identifizierung der einzelnen Angaben der Zahlungsinformationen des Zahlungsbelegs (2) und/oder des begleitenden Informationsträgers (7) bestimmbar oder die Parameter durch eine Eingabe auswählbar sind.

2. Vorrichtung (1) nach Anspruch 1, **dadurch gekennzeichnet, daß** die erste Leseeinheit (3) und/oder die zweite Leseeinheit (6) eine optische Leseeinrichtung zum Lesen schriftlicher Zahlungsbelege (2) und/oder Informationsträger (7) umfaßt.

3. Vorrichtung (1) nach Anspruch 1 oder 2, **dadurch gekennzeichnet, daß** die Vorrichtung (1) eine Erkennungseinheit (8) zum Identifizieren der von der zweiten Leseeinheit (6) eingelesenen Zahlungsinformationen umfaßt.

4. Vorrichtung (1) nach einem der voranstehenden Ansprüche, **dadurch gekennzeichnet, daß** die erste Leseeinheit (3) einen Codeleser zum Lesen der in maschinen-lesbaren Zeichen auf einem schriftlichen Zahlungsbeleg (2) dargestellten Zahlungsdaten umfaßt.

5. Vorrichtung (1) nach einem der voranstehenden Ansprüche, **dadurch gekennzeichnet, daß** der ersten Leseeinheit (3) eine Bedruckungsvorrichtung zum Bedrukken schriftlicher Zahlungsbelege (2) mit maschinen-lesbaren Zeichen zugeordnet ist.

6. Vorrichtung (1) nach einem der voranstehenden Ansprüche, **dadurch gekennzeichnet, daß** die Vorrichtung (1) eine Bearbeitungseinheit (9) zur Korrektur und/oder Ergänzung der von der Leseeinheit (3) und der Leseeinheit (6) bzw. der Erkennungseinheit (8) erfaßten Zahlungsdaten und Zahlungsinformationen umfaßt.

7. Vorrichtung (1) nach einem der voranstehenden Ansprüche, **dadurch gekennzeichnet, daß** die Ausgabeeinheit (5) eine Schnittstelle (10) zur Datenübertragung und/oder zum Datenaustausch umfaßt.

8. Verfahren zur Bearbeitung eines Zahlungsbelegs (2) wie eines Schecks oder einer Überweisung, wobei Zahlungsdaten, nämlich Betrag und gegebenenfalls Währung, Bankangaben, wie Bankleitzahl und Kontonummer, Datum od. dgl. eingelesen sowie begleitende Zahlungsinformationen, nämlich zumindest Angaben zum Verwendungszweck, wie Rechnungsnummer, Rechnungsbetrag, Skonto od. dgl. vom Zahlungsbeleg oder von einem begleitenden Informationsträger (7) eingelesen werden, wobei die Zahlungsdaten und Zahlungsinformationen einander zugeordnet und gespeichert, angezeigt und/oder ausgegeben werden,
**dadurch gekennzeichnet,**
**daß** Parameter zur Identifizierung der einzelnen Angaben der Zahlungsinformationen beim Einlesen und/oder Auswerten vorgegeben werden.

9. Verfahren nach Anspruch 8, **dadurch gekennzeichnet, daß** die Parameter kundenspezifisch vorgegeben werden.

10. Verfahren nach Anspruch 8 oder 9, **dadurch gekennzeichnet, daß** die Parameter in Abhängigkeit von den Zahlungsdaten bestimmt werden.

## Claims

1. Device (1) for processing a payment voucher (2) such as a cheque or a remittance,
with a first reading unit (3) for reading payment data of the payment voucher (2),
with a processing unit (4) for evaluating read-in or input payment data, namely amount and, if applicable, currency, bank details such as bank code number and account number, date or the like,
with an output unit (5) for interim storage, display and/or output of the payment data, and
with a second reading unit (6) for reading accompanying payment information, namely at least details concerning the purpose such as invoice numbers, invoice amounts, discounts or the like, of the payment voucher (2) or of an accompanying information carrier or notice (7),
wherein the processing unit (4) is designed such that the payment data and payment information can be mutually allocated or related such that a purpose for payment or several purposes for payment can be allocated or related to the payment data of a payment voucher,
so that the mutually allocated payment data and payment information can be stored, displayed and/or output, by means of the output unit (5),
**characterised in**
**that** the device (1) is designed such that parameters for the second reading unit (6) and/or a recognition unit (8) for identification of individual payment information on the payment voucher (2) and/or on the accompanying information notice (7) can be determined from the payment data, in particular from the account number, by means of a specifiable list, for example sorted according to customers, or the parameters can be selected by input.

2. Device (1) according to claim 1, **characterised in that** the first reading unit (3) and/or the second reading unit (6) comprise/s an optical reading device for reading written payment vouchers (2) and/or information notices (7).

3. Device (1) according to claim 1 or 2, **characterised in that** the device (1) comprises a recognition unit (8) for identifying the payment information read-in by the second reading unit (6).

4. Device (1) according to one of the preceding claims, **characterised in that** the first reading unit (3) comprises a code reader for reading the payment data represented in machine-readable characters on a written payment voucher (2).

5. Device (1) according to one of the preceding claims, **characterised in that** a printing device for printing written payment vouchers (2) with machine-readable characters is associated to the first reading device (3).

6. Device (1) according to one of the preceding claims, **characterised in that** the device (1) comprises an editing unit (9) for correcting and/or completing the payment data and payment information recorded by the reading unit (3) and the reading unit (6) or the recognition unit (8).

7. Device (1) according to one of the preceding claims, **characterised in that** the output unit (5) comprises an interface (10) for data transmission and/or for data exchange.

8. Method for processing a payment voucher (2) such as a cheque or a remittance, wherein payment data, namely amount and, if applicable, currency, bank details such as bank code number and account number, date or the like, are read-in and wherein accompanying payment information, namely at least details on the purpose, such as invoice number, invoice amount, discount or the like, are read-in from the payment voucher or from an accompanying information carrier or notice (7), wherein the payment data and payment information are mutually allocated and stored, displayed and/or output,
**characterised in**
**that** parameters for identification of the individual details of the payment information during reading in and/or evaluation are specified.

9. Method according to claim 8, **characterised in that** the parameters are specified so as to be customer-specific.

10. Method according to claim 8 or 9, **characterised in that** the parameters are determined depending on the payment data.

## Revendications

1. Dispositif (1) pour le traitement d'un récépissé de payement (2) tel qu'un chèque ou un virement, comprenant
une première unité de lecture (3) pour la lecture de données de payement du récépissé de payement (2),
une unité de traitement (4) pour l'évaluation de données de payement lues ou entrées, plus précisément un montant et le cas échéant une devise, des données bancaires telles que le code de l'établissement bancaire et le numéro du compte, la date ou analogues,
une unité de sortie (5) pour la mémorisation intermédiaire, l'affichage et/ou la sortie des données de payement, et
une deuxième unité de lecture (6) pour la lecture d'informations de payement d'accompagnement, plus précisément au moins d'indications concernant l'objet d'utilisation, telles que des numéros de factures, des montants, des escomptes ou analogues, à partir du récépissé de payement (2) ou d'un support d'informations d'accompagnement (7),
dans lequel l'unité de traitement (4) est réalisée de telle sorte que les données de payement et les informations de payement sont rapportées les unes aux autres, si bien que l'on peut attribuer un objet d'utilisation ou plusieurs objets d'utilisation aux données de payement d'un récépissé de payement,
si bien que les données de payement et les informations de payement rapportées les unes aux autres peuvent être mémorisées, affichées et/ou sorties à l'aide de l'unité de sortie (5),
**caractérisé en ce que**
le dispositif (1) est réalisé de telle sorte qu'à partir des données de payement, en particulier à partir du numéro de compte, à l'aide d'une liste prédéfinissable établie par exemple sur base de clients, des paramètres pour la deuxième unité de lecture (6) et/ou pour une unité de reconnaissance (8) peuvent être déterminés à des fins d'identification des indications individuelles des informations de payement du récépissé de payement (2) et/ou du support d'informations d'accompagnement (7) ou bien les paramètres peuvent être sélectionnés via une entrée.

2. Dispositif (1) selon la revendication 1, **caractérisé en ce que** la première unité de lecture (3) et/ou la deuxième unité de lecture (6) comprennent un mécanisme de lecture optique pour la lecture de récépissés de payement écrits (2) et/ou de supports d'informations (7).

3. Dispositif (1) selon la revendication 1 ou 2, **caractérisé en ce que** le dispositif (1) comprend une unité de reconnaissance (8) pour l'identification des informations de payement lues par la deuxième unité de lecture (6).

4. Dispositif (1) selon l'une quelconque des revendications précédentes, **caractérisé en ce que** la première unité de lecture (3) est un lecteur de codes pour la lecture des données de payement représentées en signes exploitables par une machine sur un récépissé de payement écrit (2).

5. Dispositif (1) selon l'une quelconque des revendications précédentes, **caractérisé en ce qu'**un dispositif d'impression est attribué à la première unité de lecture (3) pour imprimer des récépissés de payement écrits (2) avec des signes exploitables par une machine.

6. Dispositif (1) selon l'une quelconque des revendications précédentes, **caractérisé en ce que** le dispositif (1) comprend une unité de transformation (9) permettant de corriger et/ou de compléter les données de payement et les informations de payement enregistrées par l'unité de lecture (3) et par l'unité de lecture (6), respectivement par l'unité de reconnaissance (8).

7. Dispositif (1) selon l'une quelconque des revendications précédentes, **caractérisé en ce que** l'unité de sortie (5) comprend une interface (10) pour la transmission de données et/ou pour l'échange de données.

8. Procédé pour le traitement d'un récépissé de payement tel qu'un chèque ou un virement, dans lequel on entre des données de payement, plus précisément un montant et le cas échéant une devise, des indications bancaires telles que le code de l'établissement bancaire et le numéro de compte, la date ou analogue ainsi que des informations de payement d'accompagnement, plus précisément au moins des indications concernant l'objet d'utilisation telles que le numéro de facture, le montant, l'escompte ou analogues à partir du récépissé de payement ou à partir d'un support d'informations d'accompagnement (7), dans lequel les données de payement et les informations de payement sont rapportées les unes aux autres et mémorisées, affichées et/ou sorties, **caractérisé en ce que** des paramètres pour l'identification des indications individuelles des informations de payement lors de la lecture et/ou lors de l'évaluation sont prédéfinis.

9. Procédé selon la revendication 8, **caractérisé en ce que** les paramètres sont prédéfinis de manière spécifique à des clients.

10. Procédé selon la revendication 8 ou 9, **caractérisé en ce que** les paramètres sont déterminés en fonction des données de payement.
